# EUROPEAN PATENT APPLICATION

(11) **EP 1 662 399 A1**
(43) Date of publication of application: **31.05.2006**
(21) Application number: 04772540.3
(22) Date of filing: 25.08.2004
(51) Int. Cl.: G06F 12/00, H04N 5/76

(54) **INFORMATION RECORDING MEDIUM, INFORMATION RECORDING DEVICE, AND INFORMATION RECORDING METHOD**

(30) Priority: 04.09.2003 JP 2003312268
(71) Applicant: Konica Minolta Photo Imaging, Inc., Shinjuku-ku, Tokyo 163-0512 (JP)
(72) Inventor: UEDA, Yutaka, Konica Minolta Photo Imaging, Inc., Hachioji-shi, Tokyo 192-8505 (JP)
(74) Representative: Rees, Alexander Ellison
(86) International application number: PCT/JP2004/012584
(87) International publication number: WO 2005/024634

(57) **Abstract**

The present invention is configured that specific information used for determining whether or not to create a folder with a name generated in accordance with a given rule has been previously written to an information recording medium, and that an information recording apparatus reads the specific information from the information recording medium, and only in the case where the specific information has been written, the information recording apparatus automatically generates a name of a folder in accordance with a given rule and writes the information to the folder. Thus, the user can store the information in the folder with the consistent name that facilitates the user to search and manage the information. Further, the folder name is configured using a lot of numbers, characters and symbols, so that the name can be uniquely created, and as a result, the problem such that the folder name is duplicated among a plurality of information recording mediums is prevented, thus the information management is facilitated.

## Description

### TECHNICAL FIELD OF THE INVENTION

The present invention relates to an information recording medium and information recording apparatus and information recording method, more particularly relates to an information recording medium and information recording apparatus and information recording method for recording image data.

### BACKGROUND OF THE INVENTION

In recent years, various services pertaining to the photos have been provided. For example, when a user takes a picture by a digital camera and brings the digital camera or media for digital camera on which the image data is recorded to a photoshop such as a mini-labo, the photoshop offers a service of reading the image data from the digital camera or the media using an information recording apparatus, writing the image data to an information recording medium such as a CD-R to provide it to the user (for example, Japanese Patent Publication Laid-Open No. HEI 5-182373 and other related documents).

Further, when a user takes a picture by a film camera and brings an exposed film to a photoshop such as a mini-labo, the photoshop also offers a service of developing the film, reading the image data using a reading apparatus such as a scanner, and writing the image data to an information recording medium such as a CD-R to provide it to the user.

Then, the user inserts the information recording medium in which the image data is written into a personal computer and the like, carries out operations such as display, edit, and image processing of the image data using an application such as a slide show program having been installed to the personal computer, and then prints the desired image data in the photoshop, or prints it with a home printer or other machines to utilize the image data.

In the case of the CD-R writing service, the image data is recorded in a folder with a name the service provider sets. This folder name is mainly intended to differentiate the folders in the information recording medium, and is generally formed by a simple configuration using a serial number and the like. Thus, it is impossible for the user to know when and where the stored image data has been written just by seeing the folder name, and there is a problem that the user can not search and manage the image data.

Further, in the case of the user frequently using the CD-R writing service, the folder name may be duplicated among a plurality of information recording mediums, and it may happen that the user overwrites the folder by accident when organizing the image data recorded in the plurality of information recording mediums.

Although the folder name can be set by the user, but its work is cumbersome and time-consuming. Further, when the name is freely set by each user, it is impossible to provide consistency with the other information recording mediums, which is not a preferable method for managing the image data after all.

### DISCLOSURE OF THE INVENTION

The present invention has been made in light of the above problems, and its object is to provide an information recording medium and information recording apparatus and information recording method that make it possible to record the information such as the image data in a folder with a name that facilitates searching and managing.

In order to achieve the above object, in the invention, it is configured such that the information recording medium is an information recording medium to which the image data is to be written, and that specific information, which is used for determining whether or not to create a folder for data image management with a name generated in accordance with a given rule, has been previously written in the information recording medium.

In the invention, the specific information preferably includes at least one selected from the ID information for identifying the information recording medium, a predetermined type of program and a predetermined type of content.

Further, in the invention, the folder name can be configured to be created using one or more pieces of information selected from the information for identifying the area, shop, or date and time in which the image data is written, the unique ID information of the apparatus for carrying out the image data writing, the unique ID information of the program to be written to the information recording medium, and the information for identifying the user requesting the image data writing.

Further, the information recording apparatus of the invention is an information recording apparatus for writing the image data to the information recording medium, the information recording apparatus at least including: a section for inputting the image data; a section for reading the previously written specific information from the information recording medium; a section for creating a folder for data image management with a name generated in accordance with a given rule, in the information recording medium, when the specific information has been written in the information recording medium; and a section for recording the image data in the folder.

Further, the information recording method of the invention is an information recording method for writing the image data to the information recording medium, the information recording method at least including the steps of: previously recording the specific information used for determining whether or not to create a folder for image data management with a name generated in accordance with a given rule, in the information recording medium; inputting the image data to the information recording apparatus; reading the previously written specific information from the information recording medium; creating a folder for image data management with a name generated in accordance with a given rule, in the information recording medium, when the specific information has been written in the information recording medium; and recording the image data in the folder.

As described above, in the invention, the specific information, which is used for determining whether or not to create a folder with a name generated in accordance with a given rule, has been previously written in the information recording medium, and the information recording apparatus reads the specific information from the information recording medium, and only in the case of the specific information recorded therein, automatically generates a name of a folder in accordance with a given rule, and writes the information to the relevant folder. Thus, the user can store the information in the folder with the consistent name that facilitates the user to search and manage the information.

Further, the folder name is configured using a lot of numbers, characters, and symbols (preferably of 10 digits or more), so that the folder name can be uniquely created. As a result, the problem that the folder name is duplicated among a plurality of information recording mediums is prevented and the information management can be facilitated.

In other words, with the information recording medium and information recording apparatus and information recording method according to the invention, it is possible to obtain the advantages described below.

First, the specific information has been previously written to the information recording medium, and when the specific information has been written in the information recording medium, the information recording apparatus automatically creates a folder with a name generated in accordance with a given rule and stores the image data in the relevant folder, so that it is possible to record the image data with a configuration that facilitates searching and managing.

Second, the information recording apparatus automatically creates a folder with a unique name only for the information recording medium in which the specific information has been previously written, so that the service provider can encompass the users as well as can promote the utilization of the image data writing service.

### BRIEF DESCRIPTION OF THE DRAWINGS

Fig. 1 is a view schematically showing the configuration of an information recording system according to a first embodiment of the invention;
Fig. 2 is a block diagram showing the configuration of an information recording apparatus according to the first embodiment of the invention;
Fig. 3 is a flowchart showing the procedure of an information recording method according to the first embodiment of the invention;
Fig. 4 is a view schematically showing the structure of an information recording medium according to the first embodiment of the invention;
Figs. 5a to 5d are views schematically showing the data configuration of the information recording medium according to the first embodiment of the invention;
Fig. 6 is a view schematically showing another configuration of the information recording system according to the first embodiment of the invention;
Fig. 7 is a view schematically showing still another configuration of the information recording system according to the first embodiment of the invention;
Fig. 8 is a view schematically showing the configuration of an information recording system according to a second embodiment of the invention;
Fig. 9 is a flowchart showing the procedure of an information recording method according to the second embodiment of the invention; and
Fig. 10 is a view schematically showing the structure of the recording medium.

### DESCRIPTION OF THE PREFERRED EMBODIMENTS

There is widely used a service of writing the image data of a picture taken by a digital cameral or a film camera to the information recording medium such as a CD-R. In this service, the image data is stored in a folder with a simple name to provide to the user. However, the name appended to each folder is configured by simple information such as a serial number, so that it is impossible for the user to search and manage the image data using the folder name. In addition, the folder name may be duplicated among a plurality of information recording mediums, and it may also happen that the user overwrites the file and deletes the important image data.

Thus, it is desired to configure the folder name with the information allowing the user to search and manage the image data stored in the folder. For the service provider, it is important to promote the utilization of the information recording medium they are providing, and thus there is a need to establish a system to create a folder with a specific name only in the case of writing the image data to the information recording medium they have provided.

Thus, the invention is designed such that the specific information for determining whether or not to create a folder with a name generated in accordance with a given rule has been previously recorded in the information recording medium the service provider provides, and an apparatus for writing the image data (an information recording apparatus, a personal computer and the like) is provided with a section for reading the specific information and a section for creating a folder with a name generated in accordance with a given rule, thereby when the information recording medium in which the specific information has been recorded is inserted into the specific apparatus, a folder of a unique name is automatically created and the image data is stored in the folder. Thus, the user can recognize what image data is stored in the folder by seeing the folder name and can easily search and manage the image data, while the service provider can also promote the utilization of their own information recording medium.

### (Embodiment 1)

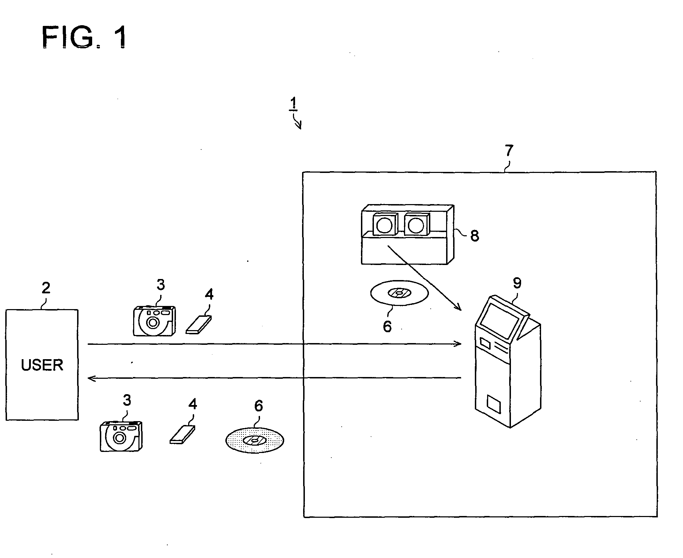

First, the information recording medium and information recording apparatus and information recording method according to a first embodiment will be described with reference to Figs. 1 to 7 and Fig. 10.

As shown in Fig. 1, an information recording system 1 of the embodiment is configured with a user 2 who takes a picture using a device including the camera function, such as a digital camera or a cellular phone with a built-in camera (hereinafter referred to as a digital camera 3), and with a photoshop 7 such as a labo. The photoshop 7 is provided with an information recording device 9 for reading the image data from the digital camera 3 or an information recording media for digital camera (for example, compact flash (registered trademark), smart media, memory stick, multimedia card, SD memory card; hereinafter referred to as a media 4) and for writing the image data to a disc-type information recording medium such as a CD-R or DVD-R in which the specific information described below has been previously recorded (hereinafter referred to as an information recording medium 6). The information recording medium 6 is displayed on a display rack 8 and the like so that the user 2 can purchase it.

Incidentally, in the embodiment, the description will be made on an example that uses an unmanned terminal (the so-called kiosk) capable of carrying out a series of processes such as receiving the order, reading the image data, and writing the image data, as the information recording apparatus 9. However, it may be configured, for example, that the order is received in an order receiving terminal and the reading/writing of the image data is carried out in the information recording apparatus, or that the order is made to a clerk of the photoshop 7 and the clerk operates a terminal in the shop to carry out the reading/writing of the image data. Fig. 1 shows the configuration that the user purchases the information recording medium 6 to which the image data is to be written, directly in the shop. However, it may be configured that the user has previously purchased the information recording medium 6 in the photoshop 7 (or another photoshop) and brings the information recording medium to the photoshop 7 together with the digital camera 3 or the media 4. Further, Fig. 1 shows the case in which the user 2 brings the digital camera 3 or the media 4 to the photoshop 7. However, it may be configured that the user brings them to an ordering shop such as a convenience store and the image data is written in the photoshop 7 through the ordering shop.

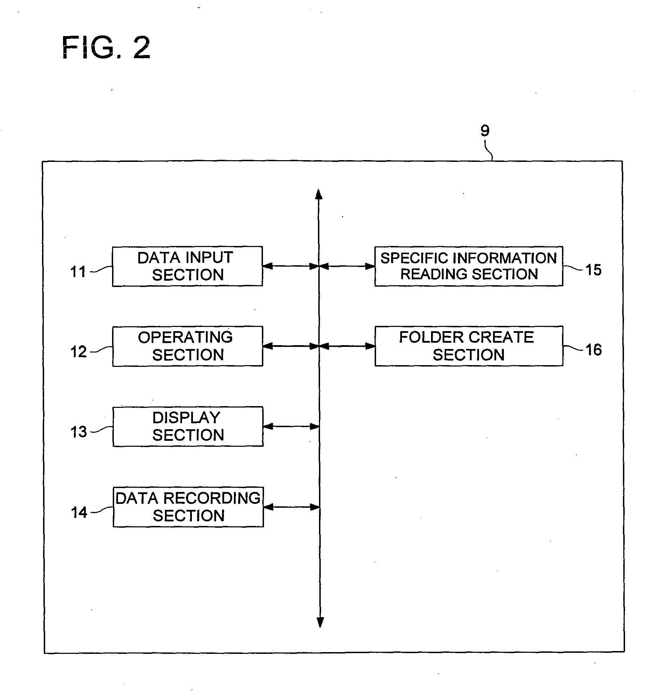

Further, as shown in Fig. 2, the information recording apparatus 9 is configured including at least: a data input section 11 for reading the recorded image data by connecting the digital camera 3 or inserting the media 4; an operating section 12 and display section 13 for carrying out operations such as inputting the order information and selecting the image data; a specific information reading section 15 for reading the specific information previously written in the information recording medium 6; a folder create section 16 for creating a folder with a name generated in accordance with a given rule; and a data recording section 14 for recording the read image data in the folder by a given unit of group (for example, by unit of medium when the image data is read from a plurality of media 4). Incidentally, the data input section 11, the specific information reading section 15, the folder create section 16, and the data recording section 14 may be configured as hardware, or as software for allowing the information recording apparatus 9 to function as these sections.

The specific information previously written to the information recording medium 6 represents the information used for determining whether or not the information recording medium 6 is the information recording medium in which the image data writing is permitted. The specific information used herein includes, for example, the identification information given to the information recording medium 6, a specific application (a slide show program for editing/reproducing the image data or a program for searching the image data, a program for image-processing the image data, a program for printing the image data with a home printer, a program for writing the image data to another information recording medium or other program), a specific content (music, design, image or other content). When theses pieces of information have been written, it is determined as the information recording medium 6 in which the image data writing is permitted. Incidentally, these pieces of information may be recorded in any area of the information recording medium 6, or may be encrypted and recorded so as to be read only by the specific information recording apparatus 9, as long as recorded so as to be readable by the information recording apparatus 9. It is also possible that the service provider writes the specific information and provides it to the photoshop 7, or that the photoshop 7 writes the specific information.

Further, although the name of the folder for storing the image data may be configured with any numbers, characters or symbols, preferably it is configured such that the user using the image data writing service can easily search and manage the image data, and more preferably is uniquely configured such that the file name is not duplicated even if the user uses this service several times. For example, when the name is generated using the information that identifies the photoshop 7 (the shop number and the like) in which the order has been made or using the information that identifies the area in which the photoshop 7 exists, it is possible to differentiate from the folder of the information recording medium 6 created in another photoshop or area. When the name is generated using the date and time information on such as the date and time of the order, the date and time when the picture as the base of the image data has been taken, or the date and time the user arbitrarily designates, it is possible to differentiate from the folder created at another date and time, which is convenient for the user to search and manage the image data. When the name is generated using the unique ID information (the machine number and the like) of the information recording apparatus 9 for writing the image data, it is possible to identify the folder crated in another information recording apparatus 9, and when the name is created using the information for identifying the user, it is possible to differentiate from the folder of the information recording medium 6 that another user has ordered. Further, when the name is generated using the unique ID information of the application as described above to be written to the information recording medium 6, it is possible to identify the written program from the folder name. In addition, when the folder name is generated by combining any of these pieces of information, for example; the shop number, the date and time, the apparatus number and the serial number, the name can be substantially the unique name, so that the folder name is never duplicated among a plurality of information recording mediums 6, and it will never happen that the user overwrites the folder when organizing the image data of the plurality of information recording mediums 6. Incidentally, from the knowledge of the inventor, it is conceivable that the unique name is created in combination of a number and character with 10 digits or more. For example, it is possible that the directory name (the combination of a 3-digit directory number and a 5-digit character) and file name (the combination of a 4-digit file number and a 4-digit character) of the data configuration (the so-called DCF) of the information recording medium for digital camera (media 4) are read by the information recording apparatus 9 to make them as a portion of the folder name.

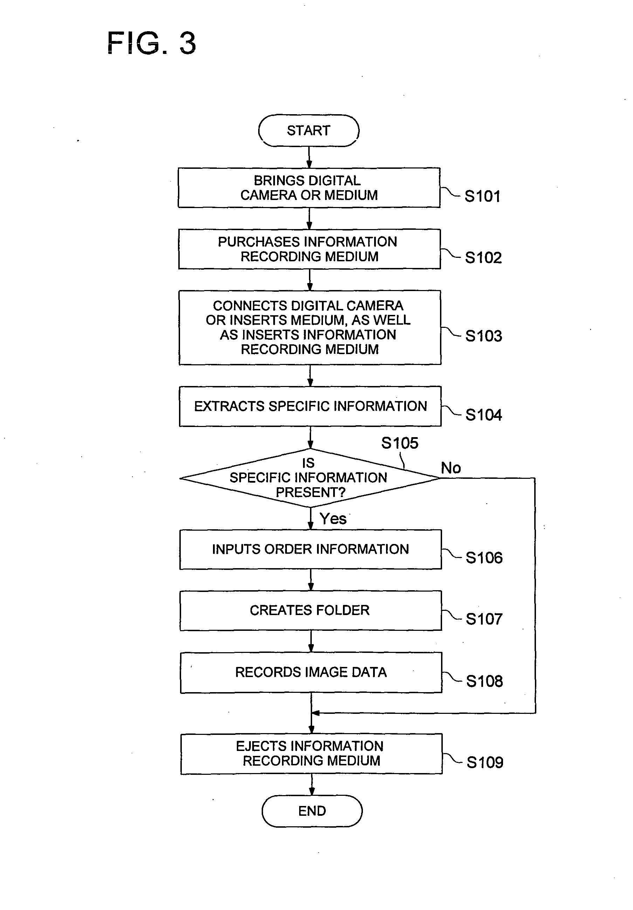

Next, the procedure until the image data is recorded in the information recording medium 6 using the information recording system 1 having the above described configuration will be described with reference to the flowchart of Fig. 3.

First, in Step S101, the user 2 takes a picture using the digital camera 3, goes out to the photoshop 7 with the digital camera 3 or media 4 in which the image data of the picture is recorded. In Step S102, the user 2 purchases the information recording medium 6 in which the specific information has been previously written, which is displayed on the display rack 8 and the like in the photoshop 7. Incidentally, it is assumed herein that the user 2 purchases the information recording medium 6 in the photoshop 7, but as described above, the user may use the information recording medium 6 purchased in another photoshop, or may reuse the information recording medium 6 in which the image data has been written before. Further, it is configured herein that the user purchases the information recording medium 6 before operating the information recording apparatus 9. However, the information recording apparatus 9 of kiosk type may sometimes include therein a CD-R dispenser to automatically supply the CD-R. In this case, the user just orders by the information recording apparatus 9 without purchasing the information recording medium 6.

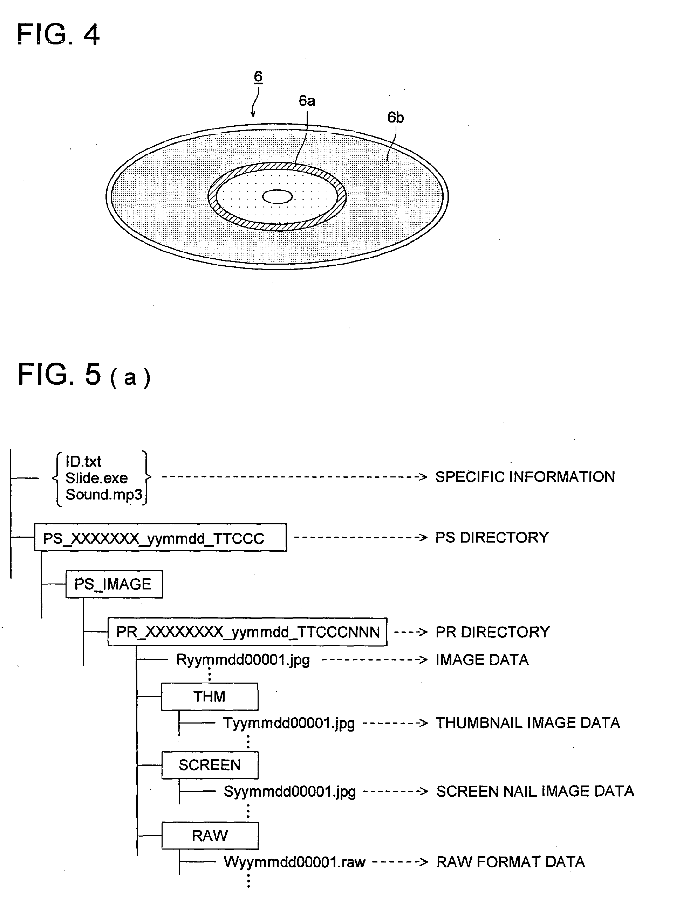

Next, in Step S103, the user 2 connects the digital camera 3 to a dedicated terminal of the information recording apparatus 9 or inserts the media 4 into a throttle, as well as inserts the purchased information recording medium 6 into a CD-R drive and the like. Then, in Step S104, the information recording apparatus 9 checks whether or not the specific information is recorded in the information recording medium 6 using the specific information reading section 15. Incidentally, as described above, although the specific information may be recorded in any area of the information recording medium 6, for example, when it is configured to be recorded in a certain area such as center side of the disc-type information recording medium as shown in Fig. 4 considering the data-seek order of the information recording apparatus 9, the specific information can be smoothly read. Further, when it is configured to be written in the outside of the logical address area in which the application for the typical personal computer can recognize, which is preferable because unauthorized access to the specific information can be prevented.

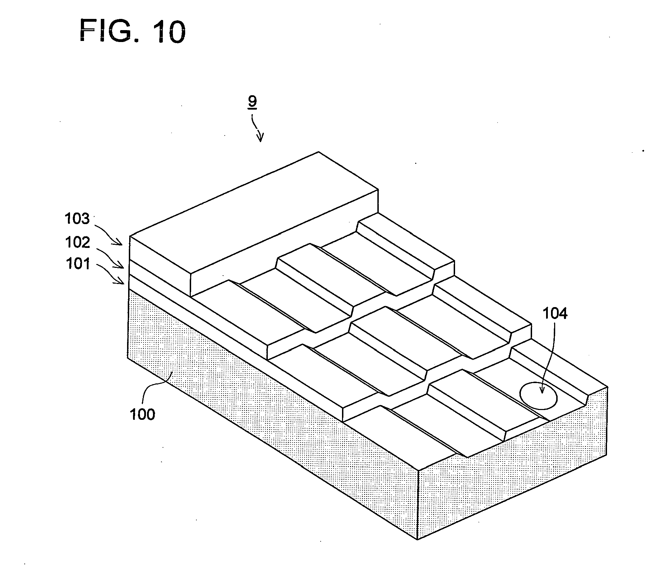

Herein, the structure of the CD-R which is a typical information recording medium will be described with reference to Fig. 10. A CD-R 9 is formed with a resin substrate 100 of polycarbonate or other material on which an organic color layer 101 of such as cyanin, phthalocyanine, azo, a reflection layer 102 of such as silver, and a protecting layer 103 are laminated respectively. As a laser beam of a given power is irradiated to the organic color layer 101, the pigment is dissolved and the substrate is deformed to form a pit 104, thereby the information is recorded. The optimum value of the laser power varies depending on the laser head system for irradiating the laser beam and on the type of the organic color layer 101 to be used. In order to ensure the information writing, it is required for the drive side to recognize the recommendation value of the type of the CD-R and the recommendation value of the laser recording power. Thus, the information on such as the application code for the disc and the recommendation value for the laser recording power is written as the information to the outside of the logical address area in the manufacturing stage of the recording medium, so that the drive reads the information and uniquely controls the laser head to adjust the laser power. An M (Manufacturer) code which is the mark of the manufacturer is also written to the outside of the logical address area.

The specific information according to the invention is written to the outside of the logical address area as the information that can be only created in the manufacturing stage, and this makes it possible to prevent the unauthorized access to the specific information. In this case, the specific information reading section 15 of the information recording apparatus 9 is configured to read the identification information from the outside of the logical area of the information recording medium.

Then, in Step S105, when the specific information has been written, the information recording apparatus determines as the information recording medium 6 in which the image data writing by the information recording apparatus 9 is permitted, and is available to receive the order. When the specific information has not been written, for example, the apparatus displays a message saying, such as, "Set the designated information recording medium" in the display section 13, and then ejects the information recording medium 6 in Step S109.

Next, in Step S106, the user 2 inputs the order information and selects the image data to be written to the information recording medium 6 using the operating section 12 and the display section 13, then in Step S107, using the folder create section 16, the information recording apparatus 9 generates a name to be appended to a folder for storing the image data in accordance with a given rule to create a folder with the name in the information recording medium 6. Preferably, as described above, this folder name is generated so as to include the information that facilitates the user to search and organize the image data. For example, when the name is generated using the information for identifying the photoshop 7, the information for identifying the date and time of the order, the information for identifying the information recording apparatus 9 and the serial number, the folder with the same name is hardly created, and it is possible to avoid the problem such that the user overwrites the folder and deletes the image data when organizing a plurality of information recording mediums 6.

Next, in Step S108, using the data recording section 14, the information recording apparatus 9 writes the image data read from the digital camera 3 or the media 4 to the folder created in the information recording medium 6. At this time, the information recording apparatus may create one folder to store all of the image data therein, but it is inconvenient for the user to search and organize the image data when a lot of image data is stored in one folder. Thus, it may be configured that the information recording apparatus previously defines the number of image data to be stored in one folder, sets the number of folders to create with reference to the storing number when reading the image data from the digital camera 3 or the media 4, and then appends the name for each of the folders. Further, it may be configured that when reading the image data from a plurality of digital camera 3 or media 4, the information recording apparatus creates the folder for each digital camera 3 or each media 4 to store the image data respectively.

The information recording medium 6 in which the image data is written in such manners has the configuration, for example, as shown in Fig. 4. The ID information of the information recording medium 6 and the specific information on the specific application and content and the like have been previously recorded in a specific information writing area 6a center side of the disc-type information recording medium, and the image data read from the digital camera 3 or the media 4 is recorded in an image data writing area 6b outside thereof.

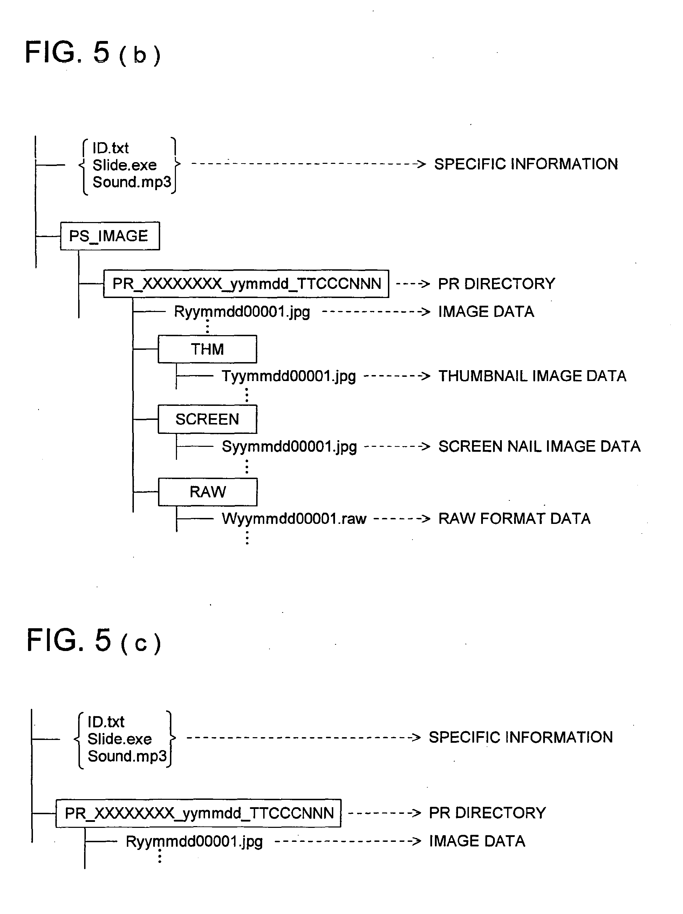

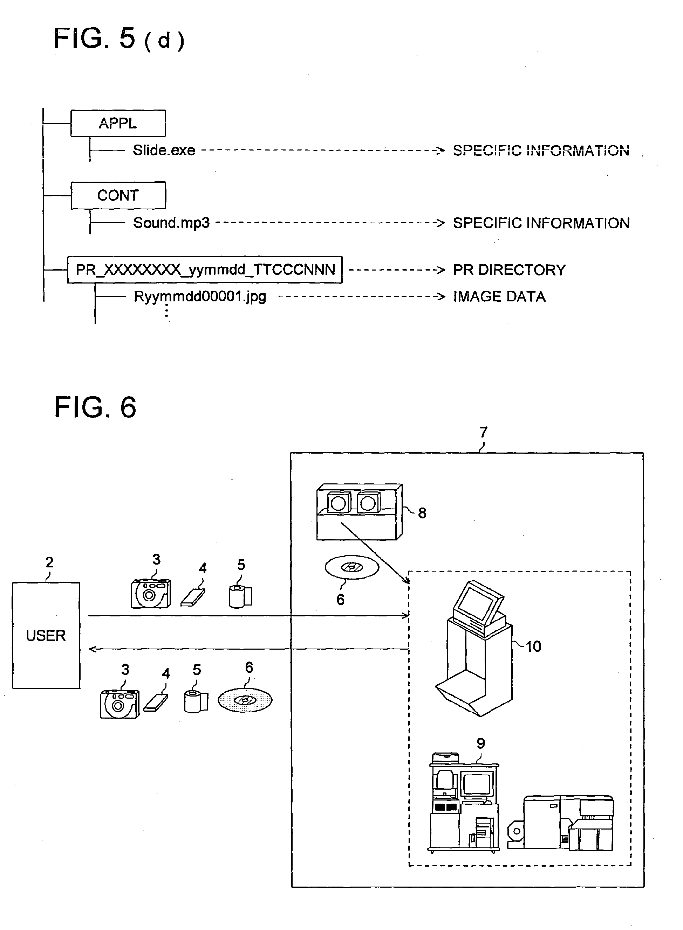

The data configuration of the information recording medium 6 is as shown in Fig. 5. For example, as shown in Fig. 5a, the folder (PS directory) with the name generated in the folder create section 16 (PS_XXXXXXX_yymmdd_TTCCC: where XXXXXXX represents the location ID such as the location in which the writing is carried out or the unique ID information for each apparatus, yymmdd represents the number for identifying the year/month/day of the writing, TT represents the number for identifying the information recording apparatus 9 (the machine serial number and the like), and CCC represents the sequential number), is created in the layer in which the ID information (ID.txt) of the information recording medium 6 and the specific information on such as the specific application (Slide.exe) and the specific content (Sound.mp3) (to make it easy to understand, the specific information is described herein as a file, but it can be the data of any format). In the lower layer, the folder (PS_IMAGE) provided for storing the image data is created. In the further lower layer, the folder (PR directory) of the name appended with PR_XXXXXXX_yymmdd_TTCCCNNN: where XXXXXXX to CCC are the same as described above, NNN represents the sequential number by a given unit (for example, by roll or by media 4) is created, in which the image data (Ryymmdd00001.jpg and the like), the thumbnail image data (Tyymmdd00001.jpg and the like), screen nail image data (Syymmdd00001.jpg and the like), and the RWA format data (Wyymmdd00001.raw and the like) are stored.

The user inserts the CD-R and the like in which the image data is written into the personal computer, starts the application program as described above, and displays the CD-R data with a portion of the above described folder name, for example the location ID and the writing year/month/day displayed therein, thereby the user can easily search the folder having the desired image data to enjoy displaying or printing the image.

Incidentally, the data configuration of Fig. 5a is an example. For example, as shown in Fig. 5b, it may be configured that the PS directory is omitted and the PR directory is created in the lower layer of PS_IMAGE, or as shown in Fig. 5c, it may be configured that the PS directory and PS_IMAGE are omitted and PR directory is directly created. Further, the specific information may be recorded independently, but as shown in Fig. 5d, it may be configured that the specific information is stored in the folder (APPL) for storing the application and the folder (CONT) for storing the content. In this case, the specific information reading section 15 may search the folder with the predetermined name and confirm whether or not the predetermined file or data is included therein.

Then, in Step S109, the information recording apparatus 9 ejects the information recording medium 6 in which the image data is written which is then provided to the user 2, and ends the series of processes.

As described above, in the information recording medium and information recording apparatus and information recording method of the embodiment, the specific information has been previously written to the information recording medium 6, and the information recording apparatus checks whether or not the specific information has been written in the information recording medium 6 inserted therein, and when it has been written, the information recording apparatus automatically creates a folder with a unique name generated in accordance with a given rule and stores the image data in the folder. Thus, the user can easily obtain the information recording medium 6 in which the image data is written with the configuration that facilitates the user to organize the image data. Further, the information recording apparatus 9 determines whether or not to automatically create a folder with a unique name using the specific information, so that the service provider can promote the utilization of the service using their own information recording medium 6.

Incidentally, having described on the case in which the user 2 provides the image data of the picture that the user has taken by the digital camera 3. However, as shown in Fig. 6, it may be configured that the user 2 provides a photographic film 5 such as a negative film or positive film in which the image information of the picture taken by a film camera is recorded, in addition to the digital camera 3 and the media 4, and the photoshop 7 is provided with the information recording apparatus 9 including the functions such as the development of the film and the reading of the developed film (in the figure, further provided with an order receiving terminal 10), thereby developing the picture film 5, reading the developed film as the image data using a scanner and the like, and then recording the image data in the information recording medium 6.

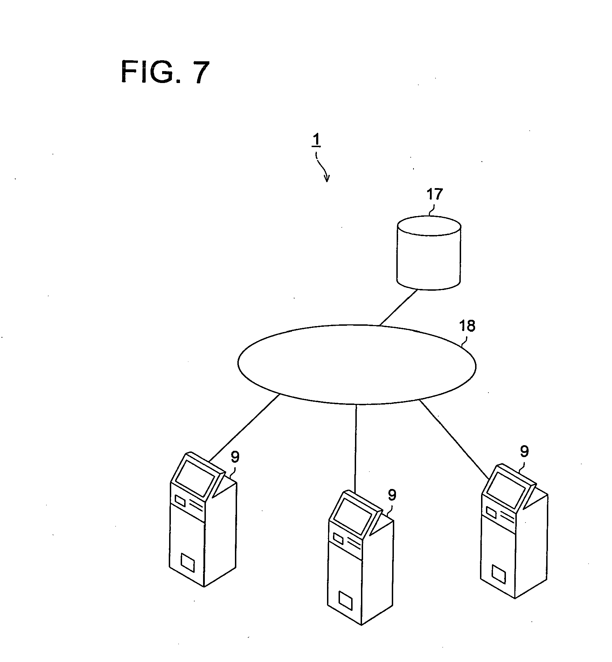

Further, the above description has been made on the configuration that the information recording apparatus 9 is independently operated to uniquely generate the folder name for each information recording apparatus 9. However, for example, in the case of the folder name with the configuration of Fig. 5, when the image data writing service is used at the same time using the information recording apparatus 9 of the same ID number in the same area and the like, it may happen that the folder name is duplicated among a plurality of information recording mediums 6. In such a case, as shown in Fig. 7, the plurality of information recording apparatuses 9 and a management server 17 for managing the folder names are connected with a communication network 18, in which the information recording apparatus 9, when creating the folder name, sends the folder name to the management server 17, and the server checks whether or not the same folder name is generated, and in the case of having the same number, sends the instruction to change the serial number and the like. Also, it may be configured that the management server 17 is provided with a section for creating a folder name, thus the management server 17 creates the folder name in response to the request from the information recording apparatus 9, and then notifies the information recording medium 9.

### (Embodiment 2)

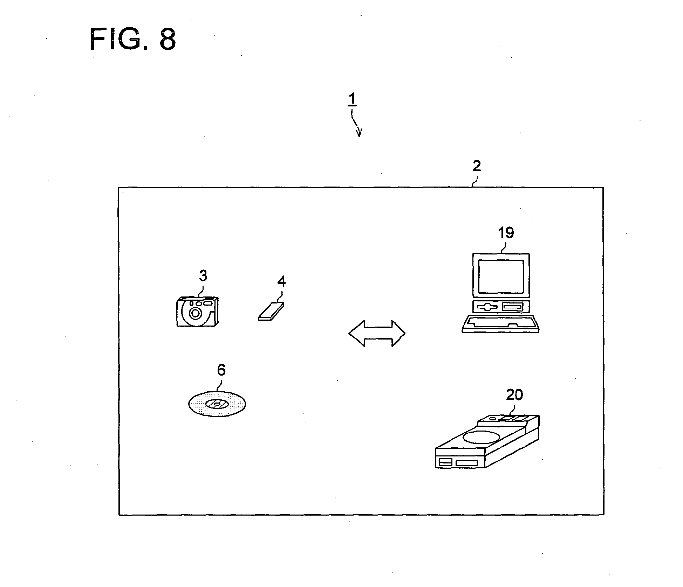

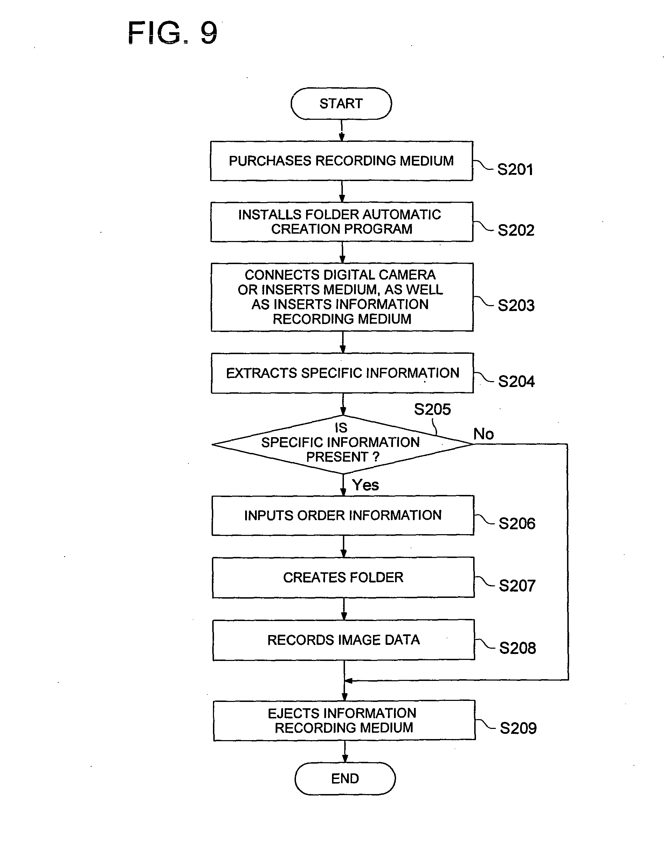

Next, the information recording medium and information recording apparatus and information recording method according to the invention will be described with reference to Figs. 8 and 9.

In the above described first embodiment, the description has been made on the case in which the user 2 carries out the image data wiring using the information recording apparatus 9 in the photoshop 7. However, the many of the recent personal computers include the function for writing the information to the information recording medium 6 such as the CD-R or DVD-R, and also the devices capable of writing the information to the information recording medium 6 with a simple operation are commercially available. Thus, in this embodiment, the system is configured so that the user 2 can write the image data at home.

More specifically, as shown in Fig. 8, the information recording system 1 of the embodiment is configured with the user 2 who takes a picture by the digital camera 3, carries out the image data wiring using a personal computer 19 or a portable writer 20 capable of writing the information to the information recording medium 6 with a simple operation.

The personal computer 19 or the portable writer 20, similarly to the information recording apparatus 9 of the first embodiment; is configured including: a data input section for reading the recorded image data by connecting the digital camera 3 or by inserting the media 4; an operation section and display section for carrying out operations such as inputting the order information and selecting the image data; a specific information reading section for reading the specific information previously written to the information recording medium 6; a folder create section for creating a folder with a name generated in accordance with a given rule; and a data recording section for recording the read image data by a given unit of group in the folder, wherein the specific information reading section, the folder create section, and the data recording section are configured as hardware or software.

The procedure until the image data of the picture that the user has taken by the digital camera 3 is recorded in the information recording medium 6 using the information recording system 1 will be described with reference to the flowchart of Fig. 9. Incidentally, the description will be made herein on the case of using the personal computer 19 capable of reading and writing the information from the information recording medium 6.

First, in Step S201, the user 2 purchases the information recording medium 6 in which the specific information (the identification information of the information recording medium, the specific application, the specific content and the like) has been previously written in the photoshop 7. Incidentally, similarly to the first embodiment, the user 2 can use the information recording medium 6 purchased in another photoshop, or can reuse the information recording medium 6 in which the image data has been written before.

Next, in Step S202, the user 2 installs a folder automatic creation program that allows the personal computer 19 to function as the specific information reading section, folder create section and data recording section. Incidentally, the way of obtaining this program is not specifically limited, and it may be configured that the user purchases from the photoshop 7 or downloads from the site the service provider manages, or that the service provider writes the folder automatic creation program to the information recording medium 6 and provides it to the user 2.

Next, in Step S203, the user connects the digital camera 3 or inserts the media 4 to the personal computer 19, as well as inserts the purchased information recording medium 6 to the computer. Then, in Step S204, the folder automatic creation program allows the computer to function as the specific information reading section that checks whether or not the predetermined specific information has been recorded in the information recording medium 6.

Then, in Step S205, when the specific information has been written, the personal computer determines as the information recording medium 6 in which the image data writing by the personal computer 19 is permitted. When the specific information is not written, for example, the personal computer displays the message saying, such as, "Set the designated information recording medium" in a monitor of the computer, and ejects the information recording medium 6 in Step S209.

Next, in Step S206, the user 2 selects the image data to be written to the information recording medium 6 and the like using the operating section such as a keyboard or a mouse and the display section such as a monitor. Then in Step S207, the folder automatic creation program allows the computer to function as the folder create section to generate a name to be appended to a folder for storing the image data in accordance with a given rule and thereby to create the folder with the name in the information recording medium 6. By crating the folder name, for example, using the information for identifying the date and time when the image data is written, the information for identifying the user, the serial number and other related information, the search and management of the image data can be facilitated, and the file with the same name is never created, so that it is possible to avoid the problem such that the user overwrites the folder and deletes the image data when organizing a plurality of information recording mediums 6.

Next, in Step S208, the folder automatic creation program allows the computer to function as the data recording section to write the image data read from the digital camera 3 or the media 4 to the folder created in the information recording medium 6. Then, in Step S209, the computer ejects the information recording medium 6 in which the image data is written, and ends the series of processes.

As described above, in the information recording medium and information recording apparatus and information recording method of the embodiment, the specific information has been previously written to the information recording medium 6, and the personal computer 19 or the portable writer 20 checks whether or not the specific information has been written in the inserted information recording medium 6. When it has been written, the personal computer 19 or the portable writer 20 automatically generates a folder with a name in accordance with a given rule and records the data image in this folder. Thus, the user can easily create the information recording medium 6 in which the image data is written with the configuration that facilitates the user to organize the image data. Further, it determines whether or not to automatically create the folder with the unique name using the specific information, so that the service provider can promote the utilization of the service using their own information recording medium 6.

Incidentally, each of the above embodiments is configured to write the image data to the information recording medium, but the invention is not limited to the above embodiments, and can be applied to any information writing. For example, it may be configured to determine whether or not to automatically create a folder for storing the music data and program, depending on whether or not the specific information has been written in the information recording medium.

### INDUSTRIAL APPLICABILITY

As described above, with the information recording medium and information recording apparatus and information recording method according to the invention, the specific information has been previously written to the information recording medium, and when the specific information has been written, the information recording apparatus automatically creates a folder with a name generated in accordance with a given rule and stores the image data in the folder, so that the image data can be recorded with the configuration that facilitates the user to search and manage the image data.

Further, the information recording apparatus automatically creates a folder with a unique name only for the information recording medium in which the specific information has been previously written, so that the service provider can encompass the users as well as can promote the utilization of the image data writing service.

## Claims

1. An information recording medium to which image data is to be written,
wherein the specific information, which is used for determining whether or not to create a folder for image data management with a name generated in accordance with a given rule, has been previously recorded therein.

2. The information recording medium according to claim 1, wherein said specific information includes at least one selected from the ID information for identifying said information recording medium, a predetermined type of program, and a predetermined type of content.

3. The information recording medium according to claim 1 or claim 2,
wherein said name of the folder is generated using at least one or more pieces of information selected from:
the information for identifying the area, shop, or date and time in which said image data is written;
the unique ID information of the apparatus for writing said image data;
the unique ID information of the program to be written to said information recording medium; and
the information for identifying the user requesting the writing of said image data.

4. An information recording apparatus for writing image data to an information recording medium, at least including:
a section for inputting said image data;
a section for reading the previously written specific information from said information recording medium;
a section for creating a folder for image data management with a name generated in accordance with a given rule, in the information recording medium, when said specific information has been written in said information recording medium; and
a section for recording said image data in said folder.

5. The information recording apparatus according to claim 4, wherein said specific information includes at least one selected from the ID information for identifying said information recording medium, a predetermined type of program, and a predetermined type of content.

6. The information recording apparatus according to claim 4 or claim 5,
wherein said name of the folder is generated using one or more pieces of information selected from:
the information for identifying the area, shop, or date and time in which said image data is written;
the unique ID information of the apparatus for writing said image data;
the unique ID information of the program to be written to said information recording medium; and
the information for identifying the user requesting the writing of said image data.

7. An information recording method for writing image data to an information recording medium, the method including the steps of:
previously recording the specific information used for determining whether or not to create a folder for image data management with a name generated in accordance with a given rule;
inputting said image data to an information recording apparatus;
reading said previously written specific information from said information recording medium;
creating a folder for image data management with a name generated in accordance with a given rule, in said information recording medium, when said specific information has been written in said information recording medium; and
recording said image data in said folder.

8. The information recording method according to claim 7. wherein said specific information includes at least one selected form the ID information for identifying said information recording medium, a predetermined type of program and a predetermined type of content.

9. The information recording method according to claim 7 or claim 8, wherein the step for creating said folder for image data management further includes generating a name of said folder for image data management using one or more pieces of information selected from:
the information for identifying the area, shop, or date and time in which said image data is written;
the unique ID information of the apparatus for writing said image data;
the unique ID information of the program to be written to said information recording medium; and
the information for identifying the user requesting the writing of said image data.
